(19) Europäisches Patentamt

European Patent Office

Office européen des brevets

(11) **EP 1 180 394 B1**

(12) **FASCICULE DE BREVET EUROPEEN**

(45) Date de publication et mention de la délivrance du brevet:
**03.01.2007 Bulletin 2007/01**

(51) Int Cl.:
*B01J 8/02* (2006.01)  *B01J 8/04* (2006.01)
*B01F 3/04* (2006.01)  *B01F 3/08* (2006.01)

(21) Numéro de dépôt: **01402130.7**

(22) Date de dépôt: **07.08.2001**

(54) **Dispositif d'injection d'un fluide placé entre deux lits successifs permettant de réaliser et de distribuer simultanement un mélange polyphasique**

Vorrichtung zur Einspritzung von Fluid zwischen zwei Schichten zur gleichzeitigen Ausführung und Verteilung einer Mehrphasenmischung

Apparatus for injecting a fluid between two successive beds for effecting and distributing simultaneously a multi-phase mixture

(84) Etats contractants désignés:
**DE ES GB IT NL**

(30) Priorité: **17.08.2000 FR 0010693**

(43) Date de publication de la demande:
**20.02.2002 Bulletin 2002/08**

(73) Titulaire: **Institut Français du Pétrole**
**92852 Rueil-Malmaison Cedex (FR)**

(72) Inventeurs:
• **Boyer, Christophe**
**69390 Charly (FR)**
• **Coupard, Vincent**
**69120 Vaulx-en-Velin (FR)**
• **Fanget, Bertrand**
**38200 Vienne (FR)**

(56) Documents cités:
**FR-A- 2 740 054**       **US-A- 3 946 104**
**US-A- 5 997 826**

## Description

La présente invention concerne un dispositif d'injection d'un fluide secondaire placé entre deux lits granulaires successifs et permettant d'optimiser le mélange entre plusieurs fluides et la distribution dudit mélange, celui-ci s'effectuant généralement entre d'une part une phase liquide et une phase gazeuse issues du lit granulaire supérieur et d'autre part une phase injectée qui est généralement essentiellement gazeuse et comprenant le plus souvent au moins en partie de l'hydrogène. Sans sortir du cadre de l'invention, le fluide injecté peut également être une phase liquide. Lesdits systèmes d'injection, de mélange et de distribution sont généralement intégrés dans un réacteur à lit fixe dans lequel l'écoulement des fluides est à co-courant descendant à travers le ou lesdits lits de solides granulaires.

On parlera indifféremment dans la suite de la présente description de systèmes ou de dispositifs d'injection, de mélange et de distribution.

La présente invention trouve en particulier une application dans tous les cas :

- où les phases gazeuses sont largement majoritaires par rapport aux phases liquides c'est-à-dire où le rapport volumique entre l'ensemble des gaz et l'ensemble des liquides est souvent supérieur à 3 : 1 et habituellement inférieur à

$$400 : 1 \ (3 < \frac{Gaz\ vol}{Liquide\ vol} < 400)$$

- où les phases gazeuses sont minoritaires par rapport aux phases liquides c'est-à-dire où le rapport volumique entre l'ensemble des gaz et l'ensemble des liquides est souvent supérieur à 0.1 : 1 et habituellement inférieur à

$$1 : 1 \ (0.1 < \frac{Gaz\ vol}{Liquide\ vol} < 1),$$

- où la réaction est fortement exothermique et nécessite l'introduction dans le réacteur d'un fluide supplémentaire, qui est souvent un gaz, pour refroidir le mélange gaz/liquide,

- où la réaction nécessite un contact étroit pour permettre la dissolution d'un composé le plus souvent gazeux (par exemple de l'hydrogène $H_2$) dans la phase liquide.

La présente invention s'applique en particulier dans le domaine des systèmes de quench gaz/liquide ou d'injecteur étagé comme par exemple ceux employés pour la mise en oeuvre des réactions d'hydrocraquage, d'hydrotraitement, d'hydrodésulfuration, d'hydrodéazotation, hydrogénations sélectives ou totales des coupes $C_2$ à $C_5$, l'hydrogénation sélective des essences de vapocraquage, l'hydrogénation des composés aromatiques dans des coupes aliphatiques et/ou naphténiques, l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'animation, d'acétyloxydation, d'ammoxydation et d'halogénation en particulier de chloration.

Dans le domaine spécifique des réactions d'hydrodésulfuration, d'hydrodéazotation, d'hydrocraquage pour atteindre des conversions poussées (pour obtenir un produit contenant par exemple 30 ppm (parties par million) de soufre ou moins) il est nécessaire d'avoir une bonne distribution du gaz et du liquide mais principalement du liquide sachant que l'on se situe avec des rapports volumétriques qui varient en général d'environ 3 : 1 à environ 400 : 1 et le plus souvent d'environ 10 : 1 à environ 200 : 1 et dans le cas de l'utilisation d'un quench un très bon contact entre le gaz introduit pour effectuer le refroidissement et les fluides du procédé mis en oeuvre souvent dénommés fluides process.

La solution généralement proposée, lorsque que le fluide à distribuer traverse plusieurs lits catalytiques, consiste à mettre en oeuvre des systèmes d'injection étagée d'une charge gazeuse entre deux lits catalytiques successifs traversés par un mélange gaz/liquide.

Les brevets US 3,353,924, US 3,855,068, US 3,824,080 et US 5,567,396 décrivent par exemple des systèmes d'injection de gaz étagée entre deux lits dans lesquels l'injection du gaz secondaire, le mélange gaz secondaire/écoulement primaire et la distribution du mélange sont découplés et s'effectuent successivement. Au contraire, dans les dispositifs décrits dans la présente demande les fonctions d'injection, de mélange et de distribution des deux fluides incidents se font simultanément dans le même système.

L'un des avantages lié aux dispositifs selon la présente invention est ainsi une diminution très importante du volume nécessaire pour ces trois opérations. Ce gain de volume au niveau du dispositif d'injection, de mélange et de distribution a notamment pour avantage et conséquence de permettre l'augmentation dans le réacteur du volume disponible pour les lits de solides granulaires, lesdits solides présentant le plus souvent une activité catalytique

Le brevet US 4,235,847 décrit selon un autre concept un système dans lequel deux injections secondaires sont possibles (une en gaz et une en liquide). En sortie de lit, l'écoulement gaz/liquide est séparé à travers un système de chicanes. Le liquide est collecté au niveau d'un plateau de diamètre inférieur au diamètre du réacteur et le gaz est injecté en dessous de ce plateau dans le volume liquide collecté. Le mélange gaz/liquide (sous forme de brouillard) est alors récupéré en tête de tubes et injecté dans le lit à travers ces tubes. Ce système intègre la fonction mélange gaz/liquide et distribution du mélange au niveau d'un seul plateau mais présente l'inconvénient majeur d'une distribution limitée à un diamètre inférieur au diamètre du plateau à cause du système de chicanes. De plus au niveau des cheminées, le mélange étant récupéré à un seul niveau, ce plateau pose des problèmes de flexibilité d'utilisation avec le débit liquide. Enfin l'échange de chaleur s'effectue d'abord du gaz vers le gaz et ensuite du gaz résultant vers le liquide. Pour une même aire inter faciale développée, il y a donc une perte d'efficacité en transfert de chaleur gaz/liquide par rapport au cas où le gaz secondaire (froid) est directement mis en contact avec le liquide.

US-A-3 946 104 décrit une méthode et un dispositif pour l'obtention d'un mélange gazeux.

Plus précisément, l'invention concerne un dispositif d'injection d'un fluide secondaire placé entre deux lits granulaires successifs permettant de réaliser et de distribuer un mélange polyphasique entre le fluide secondaire et un fluide ou un mélange de fluides issu du lit granulaire supérieur. Le dispositif comporte une chambre d'injection du fluide secondaire, l'injection dudit fluide secondaire étant effectuée au niveau dudit dispositif, et des moyens permettant la mise en contact dudit fluide secondaire et d'au moins une partie du fluide ou du mélange de fluides issu du lit granulaire supérieur ainsi que la distribution simultanée du mélange résultant de ladite mise en contact vers le lit granulaire inférieur. En particulier, ledit fluide secondaire pourra être une phase gazeuse comprenant au moins en partie de l'hydrogène.

L'objet revendiqué est défini dans le libellé de la revendication indépendante 1. Des caractéristiques optionelles font partie des libellés des revendications dépendentes.

Dans l'invention, lesdits moyens de mise en contact et de distribution sont des cheminées dédiées au passage de la fraction gazeuse du fluide (206) ou du mélange de fluide issu du lit granulaire supérieur (204). Les cheminées (206) traversent de étanche la chambre, et leur hauteur est en général supérieure à la hauteur maximale atteinte par le niveau liquide. De plus elles sont avantageusement munies dans leur partie supérieure d'une plaque empêchant l'écoulement de la partie liquide du fluide ou du mélange de humide issu du lit granulaire supérieur à travers lesdites cheminées.

De plus les deux types de cheminées (204) et (206) seront avantageusement prolongés d'une distance $h_t$ en dessous de la chambre.

Dans un mode de réalisation non revendiqué les moyens de mise en contact et de distribution sont

- des cheminées (222) permettant le passage du fluide secondaire vers la partie supérieure de ladite chambre, ladite partie se présentant le plus souvent sous la forme d'un plateau,
- des tubes ou canaux mélangeurs (224), traversant de façon étanche la chambre, munis d'orifice dans leur partie supérieure permettant le passage et le mélange du fluide secondaire et d'au moins une partie du fluide ou du mélange de fluides issu du lit granulaire supérieur. Les canaux mélangeurs seront là encore avantageusement prolongés d'une distance $h_t$ en dessous de la chambre.

L'invention concerne aussi un réacteur à lit fixe comportant :

- au moins un lit supérieur de solides granulaires,
- au moins un dispositif selon l'invention placé en aval dudit lit supérieur, permettant de réaliser le mélange et la distribution d'un fluide secondaire et d'un fluide ou d'un mélange de fluides issu dudit lit,
- au moins un lit de solides granulaires placé en aval dudit dispositif,
- au moins une ligne séparée d'injection dans la chambre dudit dispositif du fluide secondaire, ladite injection se faisant de préférence sensiblement perpendiculairement par rapport à l'axe dudit réacteur.

Dans ce réacteur, les phases liquides et gazeuses circulent le plus souvent en écoulement co-courant descendant à travers le ou lesdits lits de solides granulaires. De façon préférée, lesdits lits de solides granulaires comportent au moins un solide granulaire présentant une activité catalytique.

Les dispositifs et/ou réacteur décrit dans la présente demande présente de façon plus particulière une utilisation dans des procédés d'hydrodésulfuration, d'hydrogénation sélective ou d'hydrodéazotation

D'autres avantages et caractéristiques de l'invention apparaîtront mieux à la lecture de la description donnée ci-après à titre d'exemple de réalisation.

Les figures 1 et 2 schématisent deux exemples de réalisation du réacteur permettant d'inclure les dispositifs selon la présente invention.

La figure 3 illustre un mode de réalisation selon l'invention d'un dispositif d'injection étagée ou de quench fonctionnant entre deux lits catalytiques successifs et pouvant être placés par exemple dans un des réacteurs représentés sur les figures 1 et 2.

La figure 4 illustre une dispositif d'injection ne faisant partie de l'objet revendiqué.

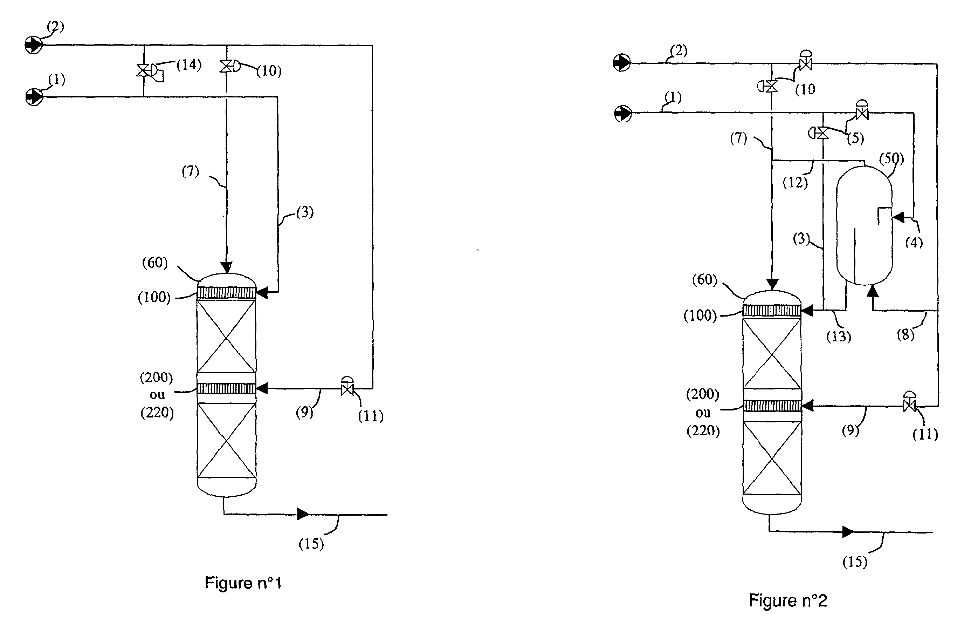

Selon un mode de réalisation d'un réacteur selon l'invention, un interne de distribution (100) est placé en tête du réacteur à lit fixe fonctionnant en écoulement liquide seul ou liquide/gaz co-courant descendant. Dans le cas où le réacteur fonctionne en écoulement liquide/gaz, la charge liquide et la charge gazeuse sont injectées, de façon séparée dans l'interne de distribution situé en tête de réacteur et à l'amont du premier lit. Une fraction du gaz injecté dans le réacteur est injectée à un niveau intermédiaire du réacteur entre deux lits successifs à travers le système d'injection, de mélange et de distribution objet de la présente invention. Ce premier schéma d'utilisation des internes de distribution selon la présente invention est présenté sur la figure 1. A l'amont de la tête du réacteur, un ballon peut être ajouté en association au système de distribution pour optimiser l'échange de matière entre la phase liquide et la phase gaz (figure 2). Ce ballon sera extérieur au réacteur. Dans ce mode de réalisation, la charge liquide et la charge gaz sont mise en contact par bullage dans ce ballon et ressortent séparément du ballon pour être injectée séparément dans le réacteur.

Plus précisément, le réacteur (60) schématisé sur la figure 1 est un réacteur à lit fixe à deux lits superposés qui fonctionne en écoulement descendant co-courant.

La charge liquide (1) est injectée à proximité de la tête du réacteur au niveau de l'interne de distribution (100) à travers la ligne (3). Cet interne de distribution pourra être choisi parmi tout dispositif de mélange et/ou de distribution connu de l'art antérieur. Avantageusement, le système de distribution placé en tête du réacteur est un dispositif tel que celui décrit dans la demande de brevet déposée par le demandeur le même jour que la présente demande.

La charge gazeuse (2) est injectée à deux niveaux en amont du réacteur (60) : en tête du réacteur par la ligne (7) et au niveau intermédiaire du réacteur par la ligne (9), à travers un interne de distribution (200 ou 220) disposé entre les deux lits successifs. En cas de montée en pression dans l'interne de distribution (100) et dans la ligne (3), un système de compensation de pression (14) (composé d'une vanne de régulation asservie à un capteur de pression différentiel) permet d'évacuer une partie du débit liquide vers la ligne (2) et la tête du réacteur. La répartition du débit gazeux injecté entre les lignes (7) et (9) est contrôlée à l'aide des vannes de régulation (10) et (11). Le débit gazeux injecté dans le réacteur (60) par la ligne (7) est habituellement compris entre 30 et 70 % molaire du débit molaire total du gaz injecté dans le réacteur (60), en (9) ce débit est compris entre 30 et 70 % molaire du débit molaire total du gaz injecté dans le réacteur (60). Après la réaction le produit est récupéré par la ligne (15).

Le réacteur (60) décrit dans la figure 2 est un réacteur à lit fixe à deux lits superposés qui fonctionne en écoulement descendant co-courant.

La charge liquide (1) est injectée en tête du réacteur. La charge gazeuse (2) est injectée à deux niveaux en amont du réacteur (60) en tête du réacteur par la ligne (7) et au niveau intermédiaire du réacteur par la ligne (9), à travers un interne de distribution (200 ou 220) disposé entre les deux lits successifs. Pour optimiser l'échange de matière entre la charge gazeuse et la charge liquide en amont du réacteur une fraction de la charge gazeuse injectée en tête est injectée à travers la ligne (8) et un ballon tampon (50). La répartition du débit gazeux injecté entre les lignes (7), (8) et (9) est contrôlée à l'aide des vannes de régulation (10) et (11) Le débit gazeux injecté dans le réacteur (60) par la ligne (7) est compris entre 0 et 70 % molaire du débit molaire gazeux total injecté dans le réacteur (60), le débit gazeux injecté par la ligne (8) est compris entre 0 et 70 % molaire du débit molaire gazeux total injecté dans le réacteur (60) et le débit gazeux injecté par la ligne (9) est compris entre 30 et 50 % molaire du débit molaire gazeux total injecté dans le réacteur (60). En entrée du réacteur, la charge liquide peut être directement injectée au niveau de l'interne de distribution (100) situé en tête de réacteur à travers la ligne (3) ou être injectée, à travers la ligne (4), dans le ballon tampon (50) avant de rejoindre l'interne de distribution (100) à travers la ligne (13). La fraction du débit de charge liquide injectée dans le réacteur par la ligne (4) est compris entre 1 et 99 % massique du débit total liquide injecté dans le réacteur et la fraction du débit de charge liquide injectée dans le réacteur par la ligne (3) est compris entre 99 et 1 % massique du débit total liquide injecté dans le réacteur. Après la réaction le produit est récupéré par la ligne (15).

Pour l'injection étagée de la charge gazeuse à un niveau intermédiaire inter-lit, deux modes de réalisation de l'invention sont proposés, à titre illustratifs et non limitatifs. Ils permettent par exemple d'injecter une phase gaz au niveau intermédiaire d'un réacteur à lit fixe fonctionnant en écoulement descendant de liquide seul ou d'un mélange gaz/liquide. L'application de ce système peut être l'injection étagée d'hydrogène dans un réacteur d'hydrogénation sélective ou dans un réacteur d'hydrodésulfuration d'une charge type gazole. Le but est d'effectuer également un transfert de chaleur en injectant la charge gazeuse à plus basse température que l'écoulement principal dans le réacteur. La charge gazeuse joue ainsi avantageusement le rôle le gaz quench. La particularité des systèmes d'injection étagée proposés dans la présente invention est d'intégrer simultanément la fonction mélange du gaz injecté avec l'écoulement principal et la fonction distribution du mélange résultant avant le lit inférieur.

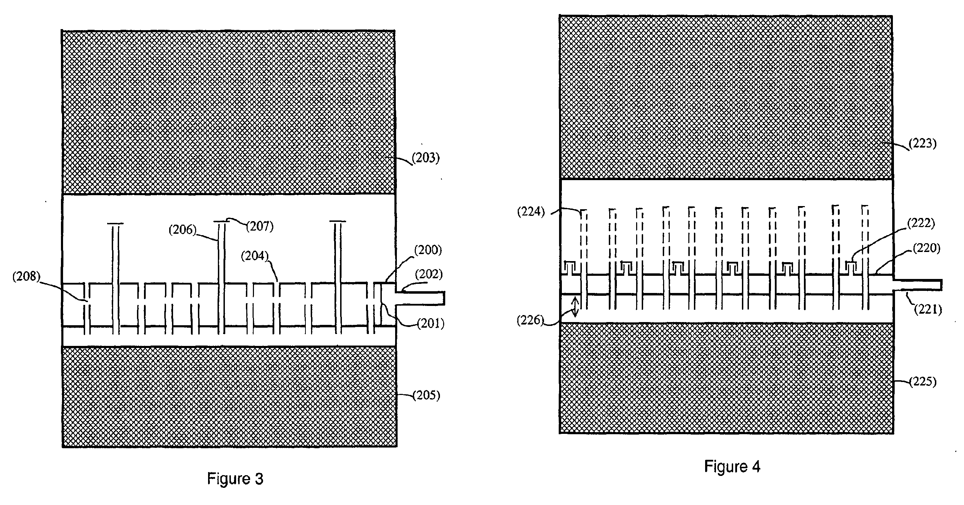

La figure 3 montre schématiquement un mode de réalisations de l'objet revendiqué. La figure 4 montre un système d'injection étagé non revendiqué.

Selon la figure 3, le fluide comprenant habituellement une phase mixte liquide/gaz récupéré du lit supérieur (203), s'écoule alors à travers des cheminées (204) qui traversent une chambre d'injection de gaz (201) avant d'être injecté dans le lit inférieur (205). Ces cheminées (204) sont en communication avec la chambre d'injection du gaz (201) au travers d'orifices situés de part et d'autre de chaque cheminée. Ainsi le gaz injecté va se mélanger au niveau de chaque cheminée d'injection. La chambre d'injection du gaz est alimentée par une entrée latérale (202) La pression du gaz dans la chambre (201) sera au moins égale à la pression dans le réacteur augmentée de la hauteur hydrostatique due au niveau liquide au-dessus de (200) et de la perte de charge du gaz au passage des trous (208).

Le gaz résiduel issu du lit supérieur (203) sera lui évacué à travers des cheminées (206) qui traversent de façon étanche la chambre d'injection du gaz (201).

Pour le premier système (200) d'injection de gaz étagée, décrit à la figure 3, le principe consiste à récupérer le mélange gaz/liquide issu du lit supérieur (203), sur la paroi supérieure de la chambre (201) où un niveau liquide va s'établir naturellement par gravité. Le liquide s'écoule à travers des cheminées (204) qui traversent une chambre d'injection du gaz (201). Cette chambre est alimentée par une conduite (202) à travers la paroi latérale du réacteur en au moins un point. Le gaz est alors injecté depuis cette chambre (201) dans l'écoulement liquide au travers d'orifices (208) répartis sur les parois des cheminées (204). Le mélange gaz/liquide s'effectue donc au sein des cheminées qui correspondent aux points d'injection du mélange dans le lit inférieur. Ainsi les fonctions mélange et distribution sont simultanées. Ces cheminées sont donc avantageusement munies d'orifices (208) sur les parois latérales pour mettre en contact le gaz injecté avec l'écoulement liquide. Les cheminées ont de préférence un diamètre sensiblement constant tout au long de leur axe. Le diamètre de ces cheminées est calculé selon toute technique ou méthode connues de l'homme du métier de façon à ce que ces cheminées ne soient pas en charge de liquide. Ce diamètre est de manière générale compris entre 5 mm et 50 mm. Le diamètre des orifices est avantageusement inférieur à 30 % du diamètre de la cheminée de façon à créer une perte de charge pour le liquide à travers ces trous plus de 10 fois supérieure à la perte de charge principale à travers les cheminées (204). Le nombre et le diamètre de ces trous sont calculés pour créer une perte de charge pour le gaz supérieure à $10^3$ Pa et de préférence supérieure à $5 \times 10^3$ Pa. Le nombre de trous par cheminées est le plus souvent compris entre 2 et 6, leur diamètre est de préférence compris entre 0,5 et 15 mm. La différence de hauteur entre les niveaux de ces trous est d'au moins 30 mm. La hauteur de la chambre d'injection du gaz est généralement comprise entre 100 et 300 mm. Cette hauteur a surtout un impact sur l'échange de matière gaz/liquide. La densité de cheminées au mètre carré est habituellement prise au moins supérieure à 80 cheminées/m² pour assurer une répartition des points d'injection gaz/liquide en tête de lit catalytique. Cette densité est en général comprise entre 100 et 700 cheminées/m² et de préférence comprise entre 150 et 500 cheminées/m². Enfin les cheminées (204) sont avantageusement prolongés d'une distance $h_t$ en dessous de la chambre d'injection du gaz (201) afin d'éviter qu'une partie du liquide se propage sous la face externe de la chambre et de diminuer l'espace compris entre le point d'injection du mélange et l'entrée dans le lit. La distance $h_t$ est comprise le plus souvent entre 10 et 50 mm. Afin d'éviter la séparation du mélange liquide/gaz avant son injection dans le lit, la distance entre le fond des cheminées (204) et le haut du lit est comprise entre 0 et 50 mm, 0 exclu et de préférence entre 0 et 20 mm, 0 exclu. Une deuxième série de cheminées (206), dont la hauteur par rapport à la paroi supérieure de la chambre (201) est supérieure à la hauteur maximale du niveau liquide, traversent la chambre d'injection gaz de façon étanche avant de déboucher à l'amont du lit secondaire. Ces cheminées ont pour but de récupérer le gaz résiduel issu du premier lit pour l'injecter en direction du lit secondaire. Ces cheminées sont recouvertes en partie supérieure d'une plaque circulaire (207) d'un diamètre égal à environ deux fois le diamètre de la cheminée (206) et située à une hauteur (par rapport à l'extrémité supérieure des cheminées) habituellement égale à la moitié du diamètre de la cheminée (206). Le diamètre de ces cheminées est compris entre 5 et 50 mm. En principe, dans le cas d'une injection étagée de gaz dans un réacteur à lit fixe, la quantité de gaz injecté en tête du réacteur n'est pas en excès par rapport à la stoechiométrie des molécules à traiter, la quantité gazeuse qui subsiste en sortie du lit (203) est donc faible par rapport à la quantité à injecter. La densité de ces cheminées est donc au moins 2 fois plus faible que la densité en cheminées à trous (204). Ces cheminées sont prolongées en dessous de la chambre d'injection gaz de la même hauteur $h_t$ de façon à injecter tous les fluides au même niveau dans le lit inférieur.

Le principe de fonctionnement du mélangeur décrit par la figure 4 consiste à récupérer le mélange gaz/liquide issu du lit supérieur (223), sur un plateau formé par la paroi supérieure (220) d'une chambre d'injection du gaz (221) où un niveau liquide va s'établir naturellement par gravité. Le gaz est injecté dans la chambre d'injection (221). Il est ensuite injecté dans le volume liquide retenu par le plateau à travers des cheminées (222).

Le mélange gaz/liquide qui s'établit alors au-dessus du plateau est injecté vers le lit inférieur (225) à travers des tubes ou canaux mélangeurs (224) qui sont munies d'orifices dans leur partie supérieure plongée dans le liquide et qui traversent de façon étanche la chambre (221). Enfin les canaux mélangeurs (224) seront avantageusement prolongés d'une distance $h_t$ en dessous de la chambre gaz (222) afin d'éviter qu'une partie du liquide se propage sous la face externe de la chambre et de diminuer l'espace compris entre le point d'injection du mélange et l'entrée dans le lit.

Pour le système (220) d'injection étagée de gaz, décrit à la figure 4, le principe consiste donc à récupérer le mélange gaz/liquide issu du lit supérieur (223), sur la paroi supérieure de la chambre (220) où un niveau liquide va s'établir naturellement par gravité. Le est injecté à travers une chambre d'injection (221) et des cheminées (222) dans le volume liquide retenu par le plateau. La chambre d'injection est alimentée par une conduite latérale (221) à travers la paroi du réacteur en au moins un point. Dans ce système, le gaz injecté est donc d'abord en contact avec le liquide sous forme d'écoulement à bulles et ensuite le mélange gaz injecté/liquide est en contact avec le gaz résiduel issu du lit amont dans les canaux mélangeurs (224). La pression du gaz dans la chambre (221) sera au moins égale à la pression dans le réacteur augmentée de la hauteur hydrostatique due au niveau liquide au-dessus de la face supérieure de (220) et de la perte de charge du gaz au passage des injecteurs (222). La fonction mélange s'effectue donc en deux étapes. De plus le mélange final gaz/liquide est effectué au niveau des points d'injection vers le lit inférieur, c'est à dire au niveau des canaux mélangeurs (224). Les fonctions mélange et distribution sont donc ici aussi simultanées.

Les cheminées destinées à l'injection du gaz (222) ont un diamètre en général compris entre 1 et 50 mm et une hauteur minimale de 50 mm pour éviter l'écoulement de liquide dans la chambre (220) à l'arrêt de l'unité. Ces cheminées sont avantageusement recouvertes d'une capsule dont le diamètre est compris entre 1 et 2 fois le diamètre de la cheminée, la hauteur est environ égale à la hauteur de la cheminée et l'espace situé entre le haut de la cheminée et la capsule est au moins égale au quart du diamètre de la cheminée. Le mélange gaz/liquide qui s'établit alors au-dessus du plateau est injecté vers le lit inférieur (225) à travers des tubes ou canaux mélangeurs (224) qui sont munies d'orifices dans leur partie supérieure plongée dans le liquide et qui traversent de façon étanche la chambre (220). Le diamètre de ces tubes est calculé selon toute technique ou méthode connues de l'homme du métier de façon à ce que ces cheminées ne soient pas en charge de liquide. Le diamètre des tubes est compris entre 5 mm et 50 mm. Le diamètre des orifices est au plus inférieur à 75 % du diamètre du tube et compris entre 3 et 35 mm. La surface totale d'ouverture à travers ces trous est au moins égale à la surface de passage du canal. Le nombre de trous est supérieur à 2 et généralement compris entre 2 et 20. De manière préférée, ces trous sont répartis de façon régulière sur la paroi latérale du canal mélangeur avec une distance minimum entre deux niveaux de 30 mm. La distance entre l'orifice inférieur d'un canal et la plaque supérieure de la chambre (221) est inférieure à la hauteur des cheminées d'injection du gaz (222). Enfin les canaux mélangeurs (224) sont avantageusement prolongés d'une distance $h_t$, (226) en dessous de la chambre gaz (222) afin d'éviter les passages préférentiels du liquide sur la face inférieure du plateau distributeur et de diminuer l'espace compris entre le point d'injection du mélange et l'entrée dans le lit. La distance $h_t$ est comprise entre 10 et 50 mm. Ensuite afin d'éviter la séparation du mélange liquide/gaz avant son injection dans le lit, la distance entre le fond des tubes (224) et le haut du lit est le plus souvent comprise entre 0 et 50 mm, 0 exclu et de préférence entre 0 et 20 mm, 0 exclu.

La densité de cheminées (224) au mètre carré est prise au moins supérieure à 80 cheminée/m$^2$ pour assurer une répartition des points d'injection gaz/liquide en tête de lit catalytique. Cette densité sera en général comprise entre 100 et 700 cheminées/m$^2$ et de préférence comprise entre 150 et 500 cheminées/m$^2$. La densité des cheminées (222) sera comprise entre 0.3 et 1 fois la densité des tubes ou canaux mélangeurs (224). Avantageusement le gaz froid injecté peut ainsi servir de gaz de quench de la réaction catalytique.

## Revendications

1. Dispositif d'injection d'un fluide secondaire placé entre deux lits granulaires successifs permettant de réaliser et de distribuer un mélange polyphasique entre ledit fluide secondaire et un fluide ou un mélange de fluides issu du lit granulaire supérieur, **caractérisé en ce qu'**il comporte une chambre d'injection du fluide secondaire, **en ce que** l'injection dudit fluide secondaire est effectuée au niveau dudit dispositif, et **en ce qu'**il comporte également des moyens permettant la mise en contact dudit fluide secondaire et d'au moins une partie du fluide ou du mélange de fluides issu du lit granulaire supérieur et la distribution simultanée du mélange résultant de ladite mise en contact vers le lit granulaire inférieur, ces moyens étant des cheminées (204) de diamètre sensiblement constant le long de leur axe traversant ladite chambre d'injection et percées d'orifices (208) sur leur paroi latérale, le dispositif comprenant également des cheminées (206) dédiées au passage de la fraction gazeuse du fluide ou du mélange de fluide issu du lit granulaire supérieur, traversant de façon étanche la chambre, dont la hauteur est supérieure à la hauteur maximale atteinte par le niveau liquide, et munies dans leur partie supérieure d'une plaque empêchant l'écoulement de la fraction liquide du fluide ou du mélange de fluide issu du lit granulaire supérieur à travers lesdites cheminées.

2. Dispositif selon la revendication 1 dans lequel ledit fluide secondaire est une phase gazeuse comprenant au moins en partie de l'hydrogène.

3. Dispositif selon l'une des revendications 1 et 2 **caractérisé en ce que** les moyens de mise en contact et de distribution sont prolongés d'une distance $h_t$ en dessous de la chambre.

4. Dispositif selon l'une des revendications 1 à 3, dans lequel la distance entre le fond des cheminées (204) et la face supérieure du lit est comprise entre 0 et 50 mm, 0 exclu et la densité des cheminées, (204) est supérieur à 80 au mètre carré.

5. Réacteur à lit fixe **caractérisé en ce qu'**il comporte :

   - au moins un lit supérieur de solides granulaires,
   - au moins un dispositif selon l'une des revendications 1 à 4 placé en aval dudit lit supérieur, permettant de réaliser le mélange et la distribution d'un fluide secondaire et d'un fluide ou d'un mélange de fluides issu dudit lit,
   - au moins un lit de solides granulaires placé en aval dudit dispositif,
- au moins une ligne séparée d'injection dans la chambre dudit dispositif du fluide secondaire, ladite injection se faisant de préférence sensiblement perpendiculairement par rapport à l'axe dudit réacteur.

**6.** Réacteur selon la revendication 5 dans lequel les phases liquides et gazeuses circulent en écoulement co-courant descendant à travers le ou lesdits lits de solides granulaires.

**7.** Réacteur selon l'une des revendications 5 ou 6 **caractérisé en ce que** le ou lesdits lits de solides granulaires comportent au moins un solide granulaire catalytique.

**8.** Utilisation du dispositif et/ou du réacteur décrit dans l'une quelconque des revendications précédentes dans des procédés d'hydrodésulfuration, d'hydrogénation sélective ou d'hydrodéazotation.

**Claims**

**1.** A device for injecting a secondary fluid located between two successive granular beds to produce and distribute a polyphase mixture between said secondary fluid and a fluid or mixture of fluids originating from the upper granular bed, **characterized in that** it comprises a chamber for injecting a secondary fluid, **in that** said secondary fluid is injected into said device, and **in that** it also comprises means for bringing said secondary fluid and at least a portion of the fluid or mixture of fluids originating from the upper granular bed into contact, and for simultaneous distribution of the mixture resulting from said contact to the lower granular bed, said means being conduits (204) with a substantially constant diameter along their axial length traversing said injection chamber and pierced with orifices (208) over their lateral wall, the device comprising also conduits (206) for the passage of the gaseous fraction of fluid or the fluid mixture originating from the upper granular bed, traversing the chamber in a fluid tight manner, the height of which is greater than the maximum height reached by the liquid, the upper portions of which are provided with a plate preventing flow of the liquid fraction of the fluid or fluid mixture originating from the upper granular bed through said conduits.

**2.** A device according to claim 1, in which said secondary fluid is a gas phase at least partially comprised by hydrogen.

**3.** A device according to any one of claims 1 to 5, **characterized in that** the contact and distribution means extend below the chamber by a distance $h_t$.

**4.** A device according to any one of claims 1 to 6, in which the distance between the bottom of the conduits (204) and the upper surface of the bed is in the range 0 to 50 mm, 0 excluded and the density of the conduits (204) is more than 80 per square metre.

**5.** A fixed bed reactor, **characterized in that** it comprises:

• at least one upper bed of granular solids;
• at least one device according to any one of claims 1 to 7 located downstream of said upper bed, to mix and distribute a secondary fluid and a fluid or a mixture of fluids issuing from said bed;
• at least one bed of granular solids located downstream of said device;
• at least one separate line for injecting secondary fluid into the chamber of said device, said injection preferably being substantially perpendicular with respect to the axis of the reactor.

**6.** A reactor according to claim 8, in which the liquid and gas phases circulate through the granular bed or beds in co-current dropper mode.

**7.** A reactor according to claim 8 or claim 9, **characterized in that** the bed or beds of granular solids comprise at least one catalytic granular solid.

**8.** Use of a device and/or reactor as defined in any one of the preceding claims, in hydrodesulphurisation, selective hydrogenation or hydrodenitrogenation processes.

**Patentansprüche**

**1.** Einspritzvorrichtung für ein Sekundärfluid, welche zwischen zwei aufeinander folgenden Schüttbetten vorgesehen wird und es ermöglicht, eine mehrphasige Mischung aus dem Sekundärfluid und einem Fluid oder einer Mischung von Fluiden , die aus dem oberen Schüttbett stammen, herzustellen und zu verteilen, **dadurch gekennzeichnet, dass** sie eine Einspritzkammer für das Sekundärfluid aufweist, dass die Einspritzung des Sekundärfluids über die Vorrichtung erfolgt und dass sie darüber hinaus Mittel aufweist, die es ermöglichen, das Sekundärfluid mit mindestens einem Teil des Fluids oder der Mischung von Fluiden, die aus dem oberen Schüttbett stammen, in Kontakt zu bringen und die Mischung, welche durch dieses Inkontaktbringen entsteht, gleichzeitig in Richtung des unteren Schüttbetts zu verteilen, wobei es sich bei den Mitteln um Schächte (204) handelt, deren Durchmesser entlang derjenigen Achse, die die Einspritzkammer durchquert, im Wesentlichen konstant ist und auf ihrer Seitenwand mit Öffnungen (208) versehen sind, wobei die Vorrichtung darüber hinaus Schächte (206) umfasst, welche dazu bestimmt sind, die gasförmige Fraktion des Fluid oder der Mischung von Fluids, die aus dem oberen Schüttbett stammen, in dichten Leitungswegen durch die Kammer hindurchzuleiten, und deren Höhe die maximale Höhe des Flüssigkeitspegels übertrifft, wobei sie im oberen Teil mit einer Platte versehen sind, die verhindert, dass die flüssige Fraktion des Fluids oder der Mischung von Fluiden, die aus dem oberen Schüttbett stammen, durch die Schächte hinabläuft.

2. Vorrichtung gemäß Anspruch 1, wobei es sich bei dem Sekundärfluid um eine gasförmige Phase handelt, die mindestens teilweise Wasserstoff umfasst.

3. Vorrichtung gemäß einem der Ansprüche 1 und 2, **dadurch gekennzeichnet, dass** die Mittel zum Kontaktieren und zum Verteilen unterhalb der Kammer um eine Strecke $h_t$ verlängert sind.

4. Vorrichtung gemäß einem der Ansprüche 1 bis 3, wobei der Abstand zwischen dem unteren Ende der Schächte (204) und der Oberseite des Bettes mehr als 0 und höchstens 50 mm beträgt und die Dichte an Schächten (204) mehr als 80 pro Quadratmeter beträgt.

5. Fettbettreaktor, **dadurch gekennzeichnet, dass** er folgende Elemente aufweist:

   - mindestens ein oberes Bett aus festem Granulat,
   - mindestens eine Vorrichtung gemäß einem der Ansprüche 1 bis 4, welche dem oberen Bett nachgeschaltet ist und es ermöglicht, die Mischung aus dem Sekundärfluid und einem Fluid oder einer Mischung von Fluiden, die aus dem oberen Schüttbett stammen, herzustellen und zu verteilen,
   - mindestens ein Bett aus festem Granulat, wobei dieses Bett der Vorrichtung nachgeschaltet ist,
   - mindestens eine gesonderte Leitung zur Einspritzung des Sekundärfluids in die Kammer der Vorrichtung, wobei die Einspritzung vorzugsweise im Wesentlichen im rechten Winkel zur Achse des Reaktors erfolgt.

6. Reaktor gemäß dem Anspruch 5, wobei die flüssigen und gasförmigen Phasen des oder der Betten aus festem Granulat in gleichgerichteter Strömung nach unten durchfließen.

7. Reaktor gemäß einem der Ansprüche 5 oder 6, **dadurch gekennzeichnet, dass** das oder die Betten aus festem Granulat mindestens ein festes Granulat mit katalytischer Wirkung umfassen.

8. Verwendung der Vorrichtung und/oder des Reaktors, die in einem beliebigen der vorhergehenden Ansprüche beschrieben wurden, in Verfahren zur Hydrodesuljurälien zur selektiven Hydrierung oder zur Hydrodeazolierung.

Figure n°2

Figure n°1

Figure 4

Figure 3